# EUROPÄISCHE PATENTSCHRIFT

(11) **EP 1 150 773 B1**
(45) Veröffentlichungstag und Bekanntmachung des Hinweises auf die Patenterteilung: **15.10.2003**
(21) Anmeldenummer: 00903648.4
(22) Anmeldetag: 28.01.2000
(51) Int. Cl.: B01L 9/06, B01L 7/02, B01D 1/30

(54) **VERDAMPFERANORDUNG MIT EINER PROBENGEFÄSS-HALTEVORRICHTUNG UND VERFAHREN ZUM VERDAMPFEN EINER PROBE**
EVAPORATOR ARRANGEMENT WITH A HOLDER FOR A SAMPLE CONTAINER AND METHOD FOR EVAPORATING A SAMPLE
ENSEMBLE EVAPORATEUR DOTE D'UN DISPOSITIF DE RETENUE DE RECIPIENT POUR ECHANTILLON ET PROCEDE D'EVAPORATION D'UN ECHANTILLON

(30) Priorität: 03.02.1999 EP 99810088
(43) Veröffentlichungstag der Anmeldung: 07.11.2001
(73) Patentinhaber: Büchi Labortechnik AG, CH-9230 Flawil (CH)
(72) Erfinder: FREYDL, Ernst, CH-9011 St. Gallen (CH); TAUER, Andreas, CH-8040 Zürich (CH); ZIOLKO, Thomas, CH-9325 Roggwil (CH)
(74) Vertreter: Müller, Christoph Emanuel
(86) Internationale Anmeldenummer: EP0000652
(87) Internationale Veröffentlichungsnummer: WO00045956

(56) Entgegenhaltungen:
- EP-A- 0 239 221
- EP-A- 0 366 601
- DE-A- 19 810 833
- FR-A- 2 763 693
- US-A- 3 940 249
- US-A- 4 933 146
- US-A- 5 514 336

## Beschreibung

Die Erfindung betrifft eine Verdampferanordnung mit einer Haltevorrichtung zum Halten von wenigstens einem Probengefäss und ein Verfahren zum Verdampfen von Proben mit den Merkmalen des Oberbegriffs der unabhängigen Patentansprüche.

Beim Verdampfen von Proben in Verdampfern ist es bekannt, am unteren Ende des zur Aufnahme der Probe dienenden Probengefässes einen Nippel anzubringen. Zweck dieses Nippels ist es, ein definierbares Restvolumen der Probe während der Verdampfung zu erzielen.

Beispielsweise aus EP-A-0.501.665 ist ein solcher Behälter bekannt, welcher gleichzeitig mit einem Sensor versehen ist. Der Sensor dient zum Beenden der Verdampfung, sobald das Restvolumen erreicht ist.

Ausserdem sind unter der Bezeichnung "Rapid Vap" der Firma Labconco Verdampfer bekannt, welche Probengefässe verwenden, die einen Nippel zum Definieren eines Restvolumens aufweisen. Der Probenbehälter wird im Bereich des Nippels nicht beheizt, so dass die Verdampfung dort geringer ist.

Die erstgenannte Lösung ist aber mit dem Nachteil behaftet, dass ein Sensor und entsprechende Elektronik zum Betrieb der Anlage notwendig ist. Ein solcher Verdampfer ist deshalb aufwendig in Herstellung und Betrieb und entsprechend teuer.

Die zweitgenannte Lösung ist mit dem Nachteil behaftet, dass immer ein bestimmter Wärmeübertrag von den beheizten Regionen des Probengefässes in den nicht beheizten Nippel erfolgt. Ausserdem erwärmt sich die Luft, welche den Nippel umgibt. Auch aufgrund dieser Tatsache wird der Nippel beheizt. Schliesslich hängt die Temperatur des Nippels von der Temperatur der Umgebungsluft ab, sodass im Betrieb des Verdampfers nicht immer die gleichen Bedingungen herrschen.

Probengefässe würden üblicherweise in einer Halterung gehalten, mittels welcher sie in einen Verdampfer hineingestellt werden können. Es sind in der Art von Racks ausgebildete Halterungen bekannt, welche die gleichzeitige Aufnahme mehrerer Probenbehälter erlauben.

Das Dokument EP-A-0.400.965 offenbart einen Reaktor mit Heizelementen.

Es ist eine Aufgabe der vorliegenden Erfindung, die Nachteile des Bekannten zu vermeiden, insbesondere eine Haltevorrichtung zum Halten von Probengefässen in einem Verdampfer zu schaffen, welche das Verdampfen der Probe bis auf ein genau vordefinierbares Restvolumen erlauben. Die Haltevorrichtung soll in einem herkömmlichen Verdampfer ohne aufwendige zusätzliche Vorkehrungen verwendbar sein. Eine weitere Aufgabe der Erfindung besteht darin, ein Verfahren zum Verdampfen einer Probe zu schaffen, welches die Verdampfung bis auf ein vorbestimmbares Restvolumen im Probenbehälter erlaubt. Typischerweise lässt sich die Haltevorrichtung in einem Vortexverdampfer (wie beispielsweise in CH-A-688.987 beschrieben) einsetzen.

Erfindungsgemäss werden diese Aufgaben mit einem Verdampfer mit einer Haltevorrichtung mit einer Haltevorrichtungs und mit einem Verfahren mit den Merkmalen des kennzeichnenden Teils der unabhängigen Patentansprüche gelöst.

Die Haltevorrichtung zum Halten wenigstens eines Probengefässes in einen Verdampfer ist mit wenigstens einer Aufnahmeöffnung versehen. Das Probengefäss ist in die Aufnahmeöffnung einsetzbar. Typischerweise ist die Haltevorrichtung als Rack ausgebildet, das zur Aufnahme von beispielsweise 6 oder auch mehr Probengefässen dient.

Um jederzeit eine Verdampfung bis auf ein genau vorbestimmbares Restvolumen sicherzustellen, ist die Aufnahmeöffnung in einem Kühlabschnitt mit Kühlmitteln versehen. Dank der Kühlmittel kann die Temperatur im Kühlabschnitt auf einen vorbestimmbaren Wert eingestellt werden. Die Verdampfung der Probe im Bereich des Kühlabschnitts wird damit vermieden. Im Bereich des Kühlabschnitts wird also ein genau vorbestimmbares Restvolumen der Probe nicht verdampft.

Eine aktive Kühlung hat den Vorteil, dass Wärmeübergänge von beheizten Abschnitten der Haltevorrichtung in den Bereich des Kühlabschnittes vermieden werden.

Die Rahmenbedingungen für die Verdampfung sind ausserdem immer gleich, da die Kühlmittel den Kühlabschnitt unabhängig von der Umgebungstemperatur auf einen vorbestimmbaren Wert kühlen können.

Der Kühlabschnitt ist in einem unteren Endbereich der Aufnahmeöffnung angeordnet. Damit wird der unterste Teil des Probengefässes gekühlt, so dass im unteren Abschnitt des Probengefässes das Restvolumen verbleibt.

Vorteilhaft verjüngt sich der Querschnitt der Aufnahmeöffnung in deren Endbereich. Die Verjüngung dient zur Aufnahme eines Nippels am unteren Ende des Probengefässes. Das Vorsehen eines Nippels erlaubt es, bei an sich relativ grossem Querschnitt des Probengefässes ein kleines Restvolumen genau einzustellen.

Die Haltevorrichtung ist in einem bevorzugten Ausführungsbeispiel im wesentlichen einstückig aus einem Block aus wärmeleitendem Material gefertigt. Die Aufnahmeöffnungen sind in dem Block angebracht, beispielsweise eingebohrt. Der Block kann beispielsweise aus Aluminium bestehen. Die Haltevorrichtung kann damit in einem Verdampfer direkt auf die Heizplatte gestellt werden. Durch Wärmeübertrag von der Heizplatte auf die Haltevorrichtung wird eine in einem Probengefäss gehaltene Probe durch Einsetzen des Probengefässes in die Aufnahmeöffnung verdampft.

Der Kühlabschnitt kann in diesem Fall durch ein in einen unteren Abschnitt der Aufnahmeöffnung eingesetztes Kühlteil gebildet sein.

Das Kühlteil ist vorteilhaft gegenüber dem geheizten Block thermisch isoliert. Das Kühlteil kann beispielsweise im wesentlichen aus einem Aussenteil und einem Innenteil gebildet sein, zwischen denen ein erster Ringspalt zur Aufnahme eines Kühlmediums gebildet ist. Der erste Ringspalt ist dabei vorteilhaft mit Dichtmitteln, beispielsweise einem O-Ring, gegenüber der Aufnahmeöffnung abgedichtet.

Das Aussenteil kann zur thermischen Isolation des Kühlteils gegenüber der Haltevorrichtung aus Kunststoffmaterial gefertigt sein. Das Innenteil ist vorteilhaft aus Metall gefertigt, damit ein guter Wärmeübertrag zwischen dem im ersten Ringspalt fliessenden Kühlmedium und dem vom Innenteil umgebenen Probengefäss gewährleistet ist.

Vorteilhaft wird ausserdem zwischen dem Kühlteil und dem heizbaren Block ein zweiter Ringspalt gebildet, der zur Aufnahme eines Isolationsmediums dient. Typischerweise ist der zweite Ringspalt mit Luft gefüllt. Das zwischen dem Aussenteil und dem Innenteil fliessende Kühlmedium ist also gegenüber dem beheizten Rest der Haltevorrichtung durch Vorsehen eines zweiten Ringspaltes und durch Bildung des Aussenteils aus einem schlecht wärmeleitenden Material thermisch isoliert.

Die Zufuhr des Kühlmediums in den ersten Ringspalt zwischen dem Innenteil und dem Aussenteil erfolgt vorzugsweise über Kanäle, welche zum Durchführen der Kühlflüssigkeit in dem Block und in dem Aussenteil angebracht sind.

Typischerweise sind im Aussenteil und im Block miteinander fluchtende Bohrungen vorgesehen, welche eine Zu- bzw. eine Ableitung für das Kühlmedium bilden. Sofern ein zweiter Ringspalt zum Bilden einer Isolation vorgesehen ist, kann dieser mit Verbindungsröhrchen überbrückt werden.

Zwischen dem Kühlteil und dem Block können ausserdem ebenfalls Dichtmittel zum Abdichten eines allfälligen zweiten Ringspalts gegen die Aufnahmeöffnung hin vorgesehen sein.

Die Dichtmittel, welche den ersten bzw. den zweiten Ringspalt abdichten, sind insbesondere dann vorteilhaft, wenn der Aussendurchmesser des Probengefässes kleiner als der freie Innendurchmesser der Aufnahmeöffnung gewählt wird. In diesem Fall kann in den dadurch gebildeten dritten Ringspalt ein Medium beigefügt werden, welches den Wärmeübertrag zwischen dem beheizten Teil der Halterung und des Probenbehälters erhöht. Typischerweise kann Wasser eingesetzt werden.

Die Haltevorrichtung bzw. der mit der Haltevorrichtung bestückte Verdampfer kann ausserdem mit Mitteln zum Messen und zum Einstellen der Temperatur des Kühlmediums versehen sein. Auf diese Weise kann die Temperatur im Bereich des Kühlabschnitts innerhalb vorbestimmter Toleranzwerte gehalten werden. Besonders einfach lässt sich die Haltevorrichtung in einem Verdampfer einsetzen, bei dem die Probegefässe mit ihren Einfüllöffnungen einzeln oder in Gruppen direkt mit einer Vakuumpumpe verbindbar sind. Der Anschluss einer Leitung für ein Kühlmedium ist in diesem Fall besonders einfach realisierbar. Ein solcher Verdampfer ist in der Offenbarung EP-A-1.027.933 beschrieben.

Das erfindungsgemässe Verfahren zeichnet sich dadurch aus, dass ein Probengefäss welches eine zu verdampfende Probe enthält während de Verdampfung in einem ein Restvolumen definierenden Bereich aktiv gekühlt wird.

Die Erfindung wird im folgenden in Ausführungsbeispielen und anhand der Zeichnungen näher erläutert. Es zeigen:
- Figur 1: einen Querschnitt durch eine erfindungsgemässe Haltevorrichtung mit eingesetztem Probengefäss,
- Figur 2: eine schematische Darstellung einer Haltevorrichtung zur Aufnahme mehrerer Probengefässe,
- Figur 3: eine vergrösserte Darstellung des Kühlabschnitts der Haltevorrichtung nach Figur 1 im Querschnitt,
- Figur 4: einen Schnitt durch die Haltevorrichtung gemäss Figur 1 entlang der Ebene B-B und
- Figur 5: eine schematische Darstellung einer erfindungsgemässen Verdampferanordnung.

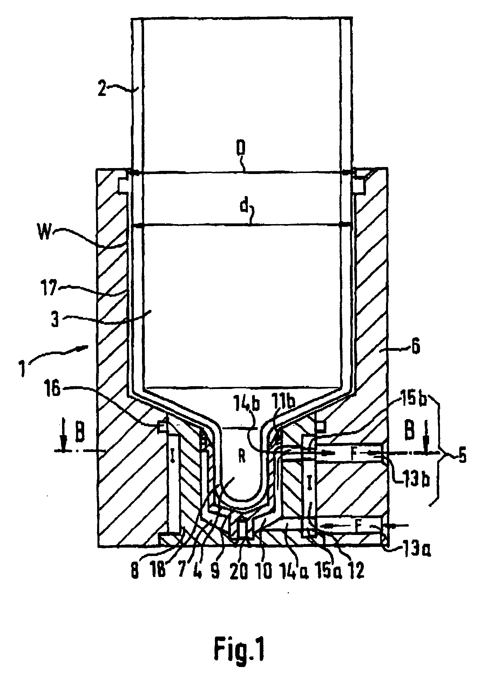

Figur 1 zeigt eine Haltevorrichtung 1 im Querschnitt. Die Haltevorrichtung 1 besteht im wesentlichen aus einem Block 6, der beispielsweise aus Aluminium gefertigt ist.

Im Block 6 sind Aufnahmeöffnungen 3 angebracht, die zum Einsetzen eines Probengefässes 2 dienen. Zum Verdampfen wird eine Probe in das Probengefäss 2 gegeben, welches in die Aufnahmeöffnung 3 eingesetzt wird.

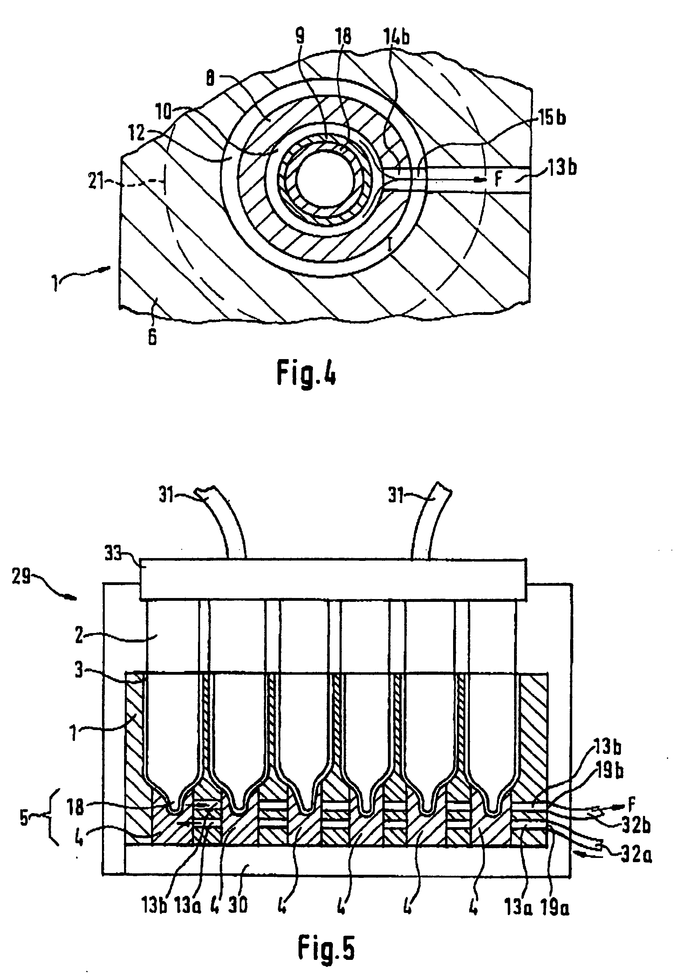

Zum Verdampfen der im Probengefäss 2 gehaltenen Probe kann der Block 6 auf eine Heizplatte eines Verdampfers (siehe Figur 5) gestellt und dadurch erwärmt werden.

In einem Endbereich 5 der Aufnahmeöffnung 3 ist ein Kühlabschnitt 4 vorgesehen. Im Kühlabschnitt 4 verjüngt sich der Querschnitt der Aufnahmeöffnung 3. Die Verjüngung dient zur Aufnahme eines am unteren Ende des Probengefässes 2 angebrachten Nippels 18. Im Nippel 18 soll während der Verdampfung ein Teil der Probe als nicht verdampftes Restvolumen R verbleiben.

Der Kühlabschnitt 4 ist durch ein in die Aufnahmeöffnung 3 eingesetztes Kühlteil 7 gebildet, das zum Kühlen des Kühlabschnitts 4 und des Nippels 18 dient.

Das Kühlteil 7 besteht im wesentlichen aus einem Aussenteil 8 und einem Innenteil 9.

Das Aussenteil ist aus Kunststoffmaterial, beispielsweise Polypropylen gefertigt. Das Innenteil 9 besteht aus Metall, beispielsweise aus Aluminium.

Zwischen dem Aussenteil 8 und dem Innenteil 9 ist ein erster Ringspalt 10 gebildet. Der Ringspalt 10 dient zur Aufnahme einer Kühlflüssigkeit F. Die Kühlflüssigkeit F kühlt das Innenteil 9 und damit den in das Innenteil hineinragenden Nippel 18 des Probengefässes 2.

Das Aussenteil 8 und das Innenteil 9 sind beispielsweise mit einer Schraube 20 miteinander verschraubt.

Zwischen dem Aussenteil 8 und dem Block 6 ist ein zweiter Ringspalt 12 vorgesehen. Der zweite Ringspalt 12 ist mit Luft I gefüllt. Die Luft I im zweiten Ringspalt dient zur thermischen Isolation des Kühlteils 7 gegenüber dem Block 6. Die Konstruktion des Aussenteils aus Kunststoffmaterial dient ebenfalls zur thermischen Isolation.

Die Kühlflüssigkeit F wird über eine Bohrung 13a im Block 6 und durch eine Bohrung 14a im Aussenteil 8 in den ersten Ringspalt 10 geleitet. Der zweite Ringspalt 12 wird mit einem Verbindungsröhrchen 15a überbrückt, welches die Bohrung 13a mit der Bohrung 14a verbindet.

Die Ableitung der Kühlflüssigkeit aus dem ersten Ringspalt 10 erfolgt in ähnlicher Weise durch eine Bohrung 14b im Aussenteil 8, ein Verbindungsröhrchen 15b und einer Bohrung 13b im Block 6.

Durch kontinuierliche Zirkulation des Kühlmediums F durch den Ringspalt 10 wird das Probengefäss 2 im Bereich des Nippels 18 gekühlt. In diesem Bereich erfolgt deshalb keine Verdampfung, so dass ein genau definierbares Restvolumen R der Probe verbleibt.

Zur Erhöhung des Wärmeübertrags zwischen dem Block 6 und dem oberen Abschnitt des Probengefässes 2 ist der Zwischenraum zwischen der Aussenwand des Probengefässes 2 und der die Aufnahmeöffnung 3 bildenden Innenwand 17 des Blocks 6 mit einem Medium gefüllt, welches den Wärmeaustausch verbessert, beispielsweise Wasser W. Dazu wird bewusst der äussere Durchmesser d des Probengefässes 2 kleiner gewählt als der freie Innendurchmesser D der Aufnahmeöffnung 3.

Um ein Eintreten des Wassers W in den ersten Ringspalt 10 bzw. in den zweiten Ringspalt 12 zu vermeiden, sind Dichtungsmittel vorgesehen.

Ein erster O-Ring 11 ist zum Abdichten des ersten Ringspalts 10 gegenüber der Aufnahmeöffnung 3 vorgesehen. Ein zweiter O-Ring 16 dichtet den zweiten Ringspalt 12 gegenüber der Aufnahmeöffnung 3, insbesondere gegenüber dem zwischen dem Probengefäss 2 und der Innenwand der Aufnahmeöffnung 3 gebildeten dritten Ringspalt 17 ab.

Als Kühlmedium wird vorteilhaft ebenfalls Wasser verwendet. Zum Kühlen kann ein handelsübliches Kühlaggregat mit einer Umwälzpumpe ausserhalb der Haltevorrichtung verwendet werden. Typischerweise werden im Betrieb 1000 ml Kühlflüssigkeit mit einer Temperatur von 10 °C pro Stunde zirkuliert. Die Haltevorrichtung 1 weist typischerweise mehrere Aufnahmeöffnungen 3 zur Aufnahme von Probengefässen 2 auf, die identisch der in Figur 1 gezeigten Aufnahmeöffnung 3 ausgebildet sind.

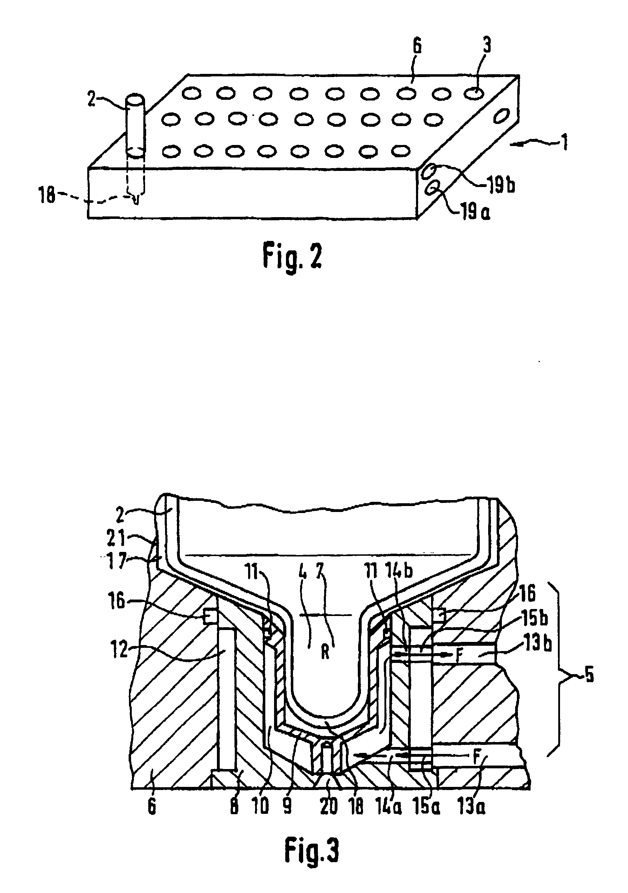

In Figur 2 ist schematisch eine Haltevorrichtung 1 gezeigt, welche aus einem Block 6 gebildet ist, der eine Vielzahl von Aufnahmeöffnungen 3 zur Aufnahme von Probengefässen 2 aufweist. Ein einzelnes Probengefäss 2 ist in Figur 2 in eine Öffnung eingesetzt dargestellt. Das Kühlmedium F wird über einen Anschluss 19a, 19b zu- bzw. abgeführt.

Figur 3 zeigt einen vergrösserten Ausschnitt der Darstellung aus Figur 1, insbesondere im Bereich des Kühlteils 7. Das Kühlteil 7 definiert einen Kühlabschnitt 4, welcher sich in einem Endabschnitt 5 der Aufnahmeöffnung 3 befindet.

Das Kühlmedium F fliesst durch den ersten Ringspalt 10 und kühlt dabei das Innenteil 9 so ab, dass auch der vom Innenteil 9 umgebene Nippel 18 gekühlt wird. Dadurch wird die Verdampfung des Restvolumens R vermieden.

In Figur 4 ist ein Schnitt durch die Haltevorrichtung 1 im Bereich des Kühlteils 7, entlang der Ebene B-B aus Figur 1 gezeigt.

Im Endbereich 5 der Aufnahmeöffnung 3 im Block 6 ist das Kühlteil 7 angebracht (siehe Figuren 1 und 3). Das Kühlteil 7 besteht aus dem Aussenteil 8 und dem Innenteil 9, zwischen welchen ein erster Ringspalt 10 gebildet wird.

Ein zweiter Ringspalt 12 wird zwischen der im Endbereich 5 verjüngten Aufnahmeöffnung 3 und dem Aussenteil 8 gebildet.

Durch eine Bohrung 13b im Block 6, welcher über ein Verbindungsröhrchen 15b mit einer Bohrung 14b im Aussenteil 8 verbunden ist, wird die Kühlflüssigkeit F aus dem ersten Ringspalt 10 abgeführt. Durch die Kühlflüssigkeit F wird das Innenteil 9 und damit der die Innenfläche des Innenteils 9 berührende Nippel 18 gekühlt.

Der zweite Ringspalt 12 ist mit Luft I zur thermischen Isolation gefüllt.

In Figur 4 ist in gestrichelten Linien ausserdem die Innenfläche 21 der Aufnahmeöffnung 3 oberhalb der Verjüngung gezeigt.

Figur 5 zeigt eine erfindungsgemässe Verdampferanordnung 29. Die Verdampferanordnung 29 weist eine Heizplatte 30 auf, auf welche die Haltevorrichtung 1 gestellt wird. Die Haltevorrichtung 1 ist in der in den vorangehenden Zeichnungen gezeigten Art ausgebildet. Die Haltevorrichtung 1 weist Aufnahmeöffnungen 3 zur Aufnahme mehrerer Probegefässe auf. In einem Endbereich 5 der Aufnahmeöffnungen ist ein Kühlabschnitt 4 vorgesehen. Der Kühlabschnitt 4 dient zum Kühlen eines Nippels 18 der Probegefässe 2. Die einzelnen Kühlabschnitte 4 sind untereinander mit Kanälen 13a, 13b für ein Kühlmedium F verbunden. Die Verdampferanordnung 29 weist eine Kühlmittelleitung 32a, 32b auf, welche mit einem Anschluss 19a, 19b der Haltevorrichtung 1 verbindbar ist.

Zusätzlich kann die Verdampferanordnung 29 mit einem Motor zum Bewegen der Heizplatte 30 versehen sein. Solche Vortexverdamper sind an sich bekannt.

Die Verdampferanordnung 29 ist mit einer Verbindungsplatte 33 versehen, welche auf die Öffnungen der Probegefässe 2 aufsetzbar ist. Die Verbindungsplatte 33 ist über Verbindungen 31 mit einer Vakuumpumpe (nicht dargestellt) verbunden. Auf diese Weise können die Probegefässe 2 einfach evakuiert werden. Gleichzeitig ist die Zufuhr des Kühlmediums F in die Haltevorrichtung 1 problemlos möglich.

## Patentansprüche

1. Verdampferanordnung (29) zum Verdampfen von in einem Probegefäss (2) gehaltenen Proben, mit einer Haltevorrichtung (1) zum Halten von wenigstens einem Probegefäss (2), welches Probegefäss (2) einen ein Restvolumen definierenden Bereich aufweist, und welche Haltevorrichtung (1) wenigstens eine Aufnahmeöffnung (3) aufweist, in welcher das Probegefäss (2) einsetzbar ist, **dadurch gekennzeichnet, dass** die Aufnahmeöffnung (3) in einem Kühlabschnitt (4) mit Kühlmitteln (7, 8, 9, 10) versehen ist, dass der Kühlabschnitt (4) in einem unteren Endbereich der Aufnahmeöffnung (3) angeordnet ist und dass der das Restvolumen definierende Bereich mit den Kühlmitteln (7, 8, 9, 10) während der Verdampfung kühlbar ist.

2. Verdampferanordnung nach Anspruch 1, **dadurch gekennzeichnet, dass** der Querschnitt der Aufnahmeöffnung (3) sich im Endbereich (5) verjüngt.

3. Verdampferanordnung nach Anspruch 1 oder 2, **dadurch gekennzeichnet, dass** die Haltevorrichtung (1) im wesentlichen einstückig aus einem Block (6) aus wärmeleitendem Material ausgebildet ist, und dass der Kühlabschnitt (4) durch ein in die Aufnahmeöffnung (3) eingesetztes Kühlteil (7) gebildet ist.

4. Verdampferanordnung nach Anspruch 3, **dadurch gekennzeichnet, dass** das Kühlteil (7) gegenüber dem Block (6) thermisch isoliert ist.

5. Verdampferanordnung nach Anspruch 3 oder 4, **dadurch gekennzeichnet, dass** das Kühlteil (7) im wesentlichen aus einem Aussenteil (8) und einem Innenteil (9) besteht, zwischen denen ein erster Ringspalt (10) zur Aufnahme eines Kühlmediums (F) gebildet ist, wobei der erste Ringspalt (10) vorzugsweise mit Dichtmitteln (11) gegenüber der Aufnahmeöffnung (3) abgedichtet ist.

6. Verdampferanordnung nach einem der Ansprüche 3 bis 5, **dadurch gekennzeichnet, dass** zwischen dem Kühlteil (7) und dem Block (6) ein zweiter Ringspalt (12) gebildet ist, der zur Aufnahme eines Isolationsmediums (I), insbesondere von Luft dient.

7. Verdampferanordnung nach einem der Ansprüche 1 bis 6, **dadurch gekennzeichnet, dass** in der Haltevorrichtung (1) Kanäle (13a, 13b, 14a, 14b, 15a, 15b) zum Durchführen einer Kühlflüssigkeit angebracht sind.

8. Verdampferanordnung nach einem der Ansprüche 5 bis 7, **dadurch gekennzeichnet, dass** im Block (6) und im Aussenteil (8) miteinander fluchtende Bohrungen (13a, 13b, 14a, 14b) zum Bilden einer Zu- bzw. einer Ableitung für das Kühlmedium (F) vorgesehen sind, wobei im Fall eines zweiten Ringspalts (12) nach Anspruch 7 dieser mit Verbindungsröhrchen (15) überbrückt ist.

9. Verdampferanordnung nach einem der Ansprüche 4 bis 8, **dadurch gekennzeichnet, dass** zwischen dem Kühlteil (7) und dem Block (6) Dichtmittel (16) zum Abdichten des zweiten Ringspalts (12) gegen die Aufnahmeöffnung (3) vorgesehen sind.

10. Verdampferanordnung nach einem der Ansprüche 1 bis 9, mit einem Probengefäss (2), welches in die Aufnahmeöffnung (3) eingesetzt oder einsetzbar ist, **dadurch gekennzeichnet, dass** der äussere Durchmesser (D) des Probengefässes (2) und der freie Innendurchmesser (s) der Aufnahmeöffnung (3) derart gewählt ist, dass zwischen dem Probengefäss (2) und derart gewählt ist, dass zwischen dem Probengefäss (2) und der Innenfläche (21) der Aufnahmeöffnung (3) ein dritter Ringspalt (17) zur Aufnahme eines die Wärmeübertragung erhöhenden Mediums (W) vorgesehen ist.

11. Verdampferanordnung nach einem der Ansprüche 1 bis 10, **dadurch gekennzeichnet, dass** Mittel zum Messen und zum Einstellen der Temperatur des Kühlmediums (F) vorgesehen sind.

12. Verfahren zum Verdampfen einer Probe in einem Probengefäss (2) **dadurch gekennzeichnet, dass** das Probengefäss (2) während der Verdampfung in einem ein Restvolumen (R) definierenden Bereich aktiv gekühlt wird.

13. Haltevorrichtung (1) für eine Verdampferanordnung (29) nach einem der Ansprüche 1 bis 11 oder zur Verwendung in einem Verfahren nach Anspruch 12 mit wenigstens einer Aufnahmeöffnung (3), in welche ein Probegefäss (2) mit einem ein Restvolumen definierenden Bereich einsetzbar ist, **dadurch gekennzeichnet, dass** die Aufnahmeöffnung (3) in einem Kühlabschnitt (4) mit Kühlmitteln (7, 8, 9, 10) versehen ist, dass der Kühlabschnitt (4) in einem unteren Endbereich der Aufnahmeöffnung (3) angeordnet ist, und dass mit Kühlmitteln (7,8,9,10) der das Restvolumen definierende Bereich während der Verdampfung kühlbar ist.

## Claims

1. Evaporator facility (29) for evaporating samples held in a samples container (2), comprising a holder (1) for holding at least one samples container (2), which samples container (2) has a zone that defines a residual volume, and which holder (1) has at least one receiving aperture (3) in which the samples container (2) can be inserted, **characterised in that** the receiving aperture (3) is provided with cooling means (7, 8, 9, 10) in a cooling section (4), that the cooling section (4) is arranged in a lower end zone of the receiving aperture and that the zone that defines the residual volume can be cooled by the cooling means (7, 8, 9, 10) during the evaporation process.

2. Evaporator facility according to claim 1, **characterised in that** the cross-section of the receiving aperture (3) tapers in the end zone (5).

3. Evaporator facility according to claim 1 or 2, **characterised in that** the holder (1) is constructed substantially in one piece from a block (6) of heat-conducting material, and that the cooling section (4) is constituted by a cooling element (7) inserted into the receiving aperture (3).

4. Evaporator facility according to claim 3, **characterised in that** the cooling element (7) is thermally insulated with respect to the block (6).

5. Evaporator facility according to claim 3 or 4, **characterised in that** the cooling element (7) consists essentially of an external part (8) and an internal part (9), between which a first annular gap (10) for receiving a cooling medium (F) is formed, the first annular gap (10) preferably being sealed off by sealants (11) with respect to the receiving aperture (3).

6. Evaporator facility according to any of claims 3 to 5, **characterised in that** between the cooling element (7) and the block (6) a second annular gap (12) is formed which is used to accommodate an insulating medium (I), especially air.

7. Evaporator facility according to any of claims 1 to 6, **characterised in that** channels (13a, 13b, 14a, 14b, 15a, 15b) for conducting a cooling fluid are mounted in the holder (1).

8. Evaporator facility according to any of claims 5 to 7, **characterised in that** provided in the block (6) and in the external part (8) are mutually aligned bores (13a, 13b, 14a, 14b) for forming an inlet/outlet for the cooling medium (F), in the event of a second annular gap (12) as claimed in claim 7 said gap being bridged by small connecting pipes (15).

9. Evaporator facility according to any of claims 4 to 8, **characterised in that** provided between the cooling element (7) and the block (6) are sealing means (16) for sealing off the second annular gap (12) with respect to the receiving aperture (3).

10. Evaporator facility according to any of claims 1 to 9, featuring a samples container (2) which is inserted or adapted to be inserted into the receiving aperture (3), **characterised in that** the external diameter (D) of the samples container (2) and the free internal diameter (s) of the receiving aperture (3) are so chosen that between the samples container (2) and the inner surface (21) of the receiving aperture (3) a third annular gap (17) is provided to accommodate a medium (W) that enhances the heat transfer.

11. Evaporator facility according to any of claims 1 to 10, **characterised in that** means are provided for measuring and adjusting the temperature of the cooling medium (F).

12. Process for evaporating a sample in a samples container (2), **characterised in that** during the evaporation process the samples container (2) is actively cooled in a zone that defines a residual volume (R).

13. Holder (1) for an evaporator facility (29) according to any of claims 1 to 11 or for use in a process according to claim 12, featuring at least one receiving aperture (3) into which a samples container (2) incorporating a zone that defines a residual volume can be inserted, **characterised in that** the receiving aperture (3) is provided with cooling means (7, 8, 9, 10) in a cooling section (4), that the cooling section (4) is arranged in a lower end portion of the receiving aperture (3), and that the zone defining the residual volume can be cooled by cooling means (7, 8, 9, 10) during the evaporation process.

## Revendications

1. Dispositif évaporateur (29) destiné à évaporer des échantillons contenus dans un récipient à essais (2), comprenant un dispositif de maintien (1) destiné à maintenir au moins un récipient à essais (2), lequel récipient à essais (2) présente une région définissant un volume résiduel, et lequel dispositif de maintien (1) présente au moins une ouverture de réception (3) dans laquelle le récipient à essais (2) peut être logé, **caractérisé en ce que** l'ouverture de réception (3) est munie de moyens de refroidissement (7, 8, 9, 10) dans un segment de refroidissement (4), **en ce que** le segment de refroidissement (9) est disposé dans une région terminale inférieure de l'ouverture de réception (3) et **en ce que** la région définissant le volume résiduel peut être refroidie à l'aide des moyens de refroidissement (7, 8, 9, 10) pendant l'évaporation.

2. Dispositif évaporateur selon la revendication 1, **caractérisé en ce que** la section de l'ouverture de réception (3) se rétrécit dans la région terminale (5).

3. Dispositif évaporateur selon la revendication 1 ou 2, **caractérisé en ce que** le dispositif de maintien (1) est sensiblement réalisé en une seule pièce à partir d'un bloc (6) de matière conductrice de la chaleur et **en ce que** le segment de refroidissement (4) est formé par une partie de refroidissement (7) logée dans l'ouverture de réception (3).

4. Dispositif évaporateur selon la revendication 3, **caractérisé en ce que** la partie de refroidissement (7) est isolée thermiquement du bloc (6).

5. Dispositif évaporateur selon la revendication 3 ou 4, **caractérisé en ce que** la partie de refroidissement (7) est essentiellement composée d'une partie extérieure (8) et d'une partie intérieure (9) entre lesquelles est formée une première fente annulaire (10) destinée à recevoir un milieu de refroidissement (F), la première fente annulaire (10) étant de préférence isolée hermétiquement de l'ouverture de réception (3) à l'aide de moyens d'étanchéité (11).

6. Dispositif évaporateur selon une des revendications 3 à 5, **caractérisé en ce que**, entre la partie de refroidissement (7) et le bloc (6) est formée une deuxième fente annulaire (12) qui sert à recevoir un milieu isolant (I), en particulier de l'air.

7. Dispositif évaporateur selon une des revendications 1 à 6, **caractérisé en ce que**, dans le dispositif de maintien (1) sont ménagés des conduits (13a, 13b, 14a, 14b, 15a, 15b) pour la circulation d'un liquide de refroidissement.

8. Dispositif évaporateur selon une des revendications 5 à 7, **caractérisé en ce que**, dans le bloc (6) et dans la partie extérieure (8) sont prévus des perçages (13a, 13b, 14a, 14b) alignés entre eux de manière à former une conduite d'arrivée et une conduite de départ pour le milieu de refroidissement (F) et, dans le cas d'une deuxième fente annulaire (12) selon la revendication 7, cette fente est contournée par de petits tubes de communication (15).

9. Dispositif évaporateur selon une des revendications 4 à 8, **caractérisé en ce que**, entre la partie de refroidissement (7) et le bloc (6) sont prévus des moyens d'étanchéité (16) destinés à isoler hermétiquement la deuxième fente annulaire (12) de l'ouverture de réception (3).

10. Dispositif évaporateur selon une des revendications 1 à 9, comprenant un récipient à essais (2) qui est logé ou peut être logé dans l'ouverture de réception (3), **caractérisé en ce que**, le diamètre extérieur (D) du récipient à essais (2) et le diamètre intérieur libre (s) de l'ouverture de réception (3) sont choisis de manière qu'une troisième fente annulaire (17) destinée à recevoir un milieu (W) qui accroît la transmission de la chaleur soit formée entre le récipient à essais (2) et la surface interne (21) de l'ouverture de réception (3).

11. Dispositif évaporateur selon une des revendications 1 à 10, **caractérisé en ce qu'**il est prévu des moyens pour mesurer et régler la température du milieu de refroidissement (F).

12. Procédé pour évaporer un échantillon dans un récipient à essais (2) **caractérisé en ce que**, pendant l'évaporation, le récipient à essais (2) est refroidi activement dans une région qui définit un volume résiduel (R).

13. Dispositif de maintien (1) prévu pour un dispositif évaporateur (29) selon une des revendication 1 à 11 ou destiné à être utilisé dans un procédé selon la revendication 12, comprenant au moins une ouverture de réception (3) dans laquelle peut être logé un récipient à essais (2) muni d'une région qui définit un volume résiduel, **caractérisé en ce que** l'ouverture de réception (3) est munie de moyens de refroidissement (7, 8, 9, 10) dans un segment de refroidissement (4), **en ce que** le segment de refroidissement (4) est disposé dans une région terminale inférieure de l'ouverture de réception (3) et **en ce que** la région définissant le volume résiduel peut être refroidie à l'aide de moyens de refroidissement (7, 8, 9, 10) pendant l'évaporation.
